# EUROPÄISCHE PATENTANMELDUNG

(11) **EP 0 583 616 A1**
(43) Veröffentlichungstag der Anmeldung: **23.02.1994**
(21) Anmeldenummer: 93111248.6
(22) Anmeldetag: 14.07.1993
(51) Int. Cl.: H02G 3/04

(54) **Halterung eines Signalkabels**

(30) Priorität: 12.08.1992 DE 9210771 U
(71) Anmelder: REHAU AG + Co, 95111 Rehau (DE)
(72) Erfinder: Sammet, Ulli, D-8673 Rehau (DE)

(57) **Zusammenfassung**

Die Erfindung betrifft die Halterung eines Signalkabels in einem Trägerprofil. Das Signalkabel selbst ist im Querschnitt über dem Leiter mehrschichtig aufgebaut und besteht aus einer Isolierschicht, einer über den größeren Umfangsbereich verlaufenden abschirmenden Sperrschicht und einer äußeren Ummantelungsschicht. Von dieser äußeren Ummantelungsschicht ragen bereichsweise Längsverdickungen ab. Das Trägerprofil ist erfindungsgemäß ein U-förmig gestaltetes Profil mit auf Vorspannung zueinander gerichteten freien U-Schenkeln. An den freien Enden der U-Schenkel sind zum lichten Innenraum des Trägerprofils gerichtet, den Konturen des Signalkabels entsprechende Ausformungen vorgesehen, in welche die Wandverdickungen der Ummantelungsschicht des Signalkabels eingreifen. Ferner besitzen die freien Enden der U-Schenkel jeweils eine auf eine Wandverdickung folgende Kerbe, in welche Rasten an den freien Schenkeln eines C-förmigen Deckelteils rastend eingreifen.

## Beschreibung

Die Neuerung betrifft die Halterung eines Signalkabels in einem Trägerprofil, wobei das Signalkabel im Querschnitt über dem Leiter mehrschichtig aufgebaut ist mit einer Isolierschicht, einer über den größeren Umfangsbereich verlaufenden, abschirmenden Sperrschicht und einer äußeren Ummantelungsschicht, von der bereichsweise Längsverdickungen abragen.

Derartige Signalkabel werden beispielsweise beim Betrieb von schienengebundenen Fahrzeugen benötigt, um während der Fahrt Steuersignale oder dergleichen aus einem stationären Kommandostand an das Fahrzeug zu übertragen. Die Signalkabel besitzen dafür längsverlaufend einen nicht von der abschirmenden Sperrschicht überdeckten Streifen, aus dem die Signale austreten und von dem Fahrzeug übernommen werden können. Das Problem lag bisher in der Halterung solcher Signalkabel und hier insbesondere in der Verhinderung der Verdrehmöglichkeit des Kabels. Wesentliche Voraussetzung hierbei ist, daß der nicht abgeschirmte Signaldurchtrittsbereich gradlinig ohne Verdrehung in dem Träger gehalten ist. Eine weitere Aufgabenstellung wird darin gesehen, daß die Halterung derart ausgebildet ist, daß das Kabel durch auftretende Betriebsschwingungen nicht beschädigt werden kann.

Zur Lösung dieser Aufgabe wird neuerungsgemäß ein U-förmig gestaltetes Trägerprofil mit auf Vorspannung zueinander gerichteten freien U-Schenkeln vorgeschlagen, wobei die U-Schenkel zum lichten Innenraum des Trägerprofils gerichtet an ihren freien Enden die Konturen des Signalkabels im Bereich der Längsverdickungen der Ummantelungsschicht aufweisen und nach außen eine auf eine Wandverdickung folgende Kerbe besitzen, in welche Rastnocken an den freien Schenkeln eines C-förmigen Deckelteils rastend eingreifen.

Das Signalkabel kann vorteilhaft in die neuerungsgemäße Halterung in Form eines Schnappvorgangs eingebracht werden. Hierbei werden die freien Schenkel des U-förmigen Trägerprofils leicht aufgebogen und das Signalkabel in den lichten Innenraum des Trägerprofils eingesetzt. Danach wird die auf die U-Schenkel einwirkende Biegekraft aufgehoben und die freien Enden der Schenkel federn über das Signalkabel zurück. Die freien Enden der Schenkel umgreifen dabei die Konturen des Signalkabels im Bereich der Längsverdickungen der Ummantelungsschicht und bilden damit eine erste Halterung des Signalkabels im Trägerprofil. Diese Halterung besitzt den Vorteil, daß der nicht abgeschirmte Umfangsbereich des Signalkabels verwindungsfrei in der lichten Öffnung des Trägerprofils gehaltert ist.

Zusätzlich zu dieser ersten Halterung wird von außen ein C-förmiges Deckelteil über die das Signalkabel halternden freien Enden der Schenkel des U-förmigen Trägerprofils aufgerastet. Hierbei greifen die Rasthaken an den freien Schenkeln des Deckelteils rastend über die nach außen weisende Wandverdickung in die Außenkerbe an den freien Enden der Schenkel des U-förmigen Trägerprofils ein.

Die neuerungsgemäße doppelte Halte- bzw. Rastverbindung des Signalkabels im Trägerprofil sichert die Signallage des Signalkabels im Trägerprofil ab. Eine Verdrehmöglichkeit des Signalkabels im Trägerprofil ist ausgeschlossen.

Zur Verhinderung einer Beschädigung des Signalkabels durch Schwingungen ist es vorteilhaft, Teilbereiche der Schenkel des Trägerprofils, die nicht bei der direkten Halterung des Signalkabels Verwendung finden, als Schwingungsdämpfer auszubilden. Hierzu weisen die Schenkel des Trägerprofils an definierten Stellen als Federzungen wirkende Einschnürungen auf. Diese Einschnürungen können spiegelbildlich an den beiden U-Schenkeln des Trägerprofils in ein- oder mehrfacher Form eingebracht sein.

In der Zeichnung sind Ausführungsbeispiele des neuerungsgemäßen Trägerprofils schematisch dargestellt; es zeigt:
Fig.1 das Trägerprofil mit Signalkabel und Deckelteil im Querschnitt
Fig.2 das Trägerprofil gemäß Fig.1 mit verlängerten U-Schenkeln und eingebrachten Schwingungsdämpfern

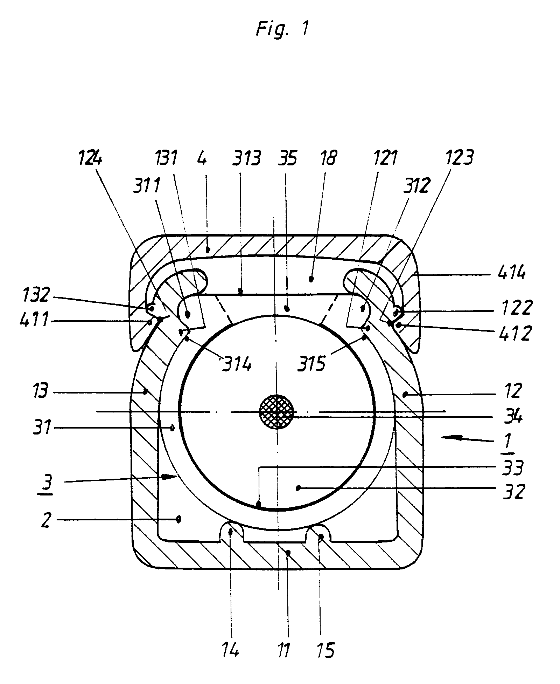

Fig.1 zeigt das Trägerprofil 1 mit dem Basisschenkel 11 und den beiden U-Schenkeln 12, 13. Im lichten Innenraum 2 des Trägerprofils 1 ist das Signalkabel 3 angedeutet, mit einer Außenschicht 31, einer inneren Ummantelungsschicht 32, auf der die abschirmende Schicht 33 aufliegt, und dem Signalleiter 34. Die Außenschicht 31 besitzt im oberen Bereich die Längsverdickungen 311, 312, welche nach außen durch die ebene Außenkontur 313 miteinander verbunden sind.

Die freien Enden der Schenkel 12, 13 entsprechen den Außenkonturen des Signalkabels 3 im Bereich der Wandverdickungen 311, 312. Im Bereich 121, 131 hintergreifen dabei die inneren Wandbereiche der freien Enden der Schenkel 12, 13 die nach den Verdickungen 311, 312 der Ummantelungsschicht 31 gebildeten Einschnürungen und legen dabei das Signalkabel in einem ersten Verrasterungsschritt fest. Bei dem Rastvorgang wird das Signalkabel auf die Abstützerhöhungen 14, 15 am Innenbereich des Basisschenkels 11 des Trägerprofils abgestützt.

Nach diesem ersten Rastvorgang wird das Deckelteil 4 mit den Rasten 411, 412 derart auf die freien Enden der Schenkel 12, 13 aufgerastet, daß die Rasten 411, 412 die nach außen gerichteten Wandverdickungen 122, 132 an den freien Enden der Schenkel 12, 13 übergreifen und in die Kerben 123, 124 einrasten. Das Signalkabel 3 ist damit im Trägerprofil 1 absolut festgelegt. Der nicht abgeschirmte Bereich des Signalkabels 3 entläßt die Signale aus dem Leiter durch die lichte Öffnung des Trägerprofils 1, wobei diese Signale die verschiedenen Kunststoffschichten des Signalkabels 3 und des Deckelteils 4 ungehindert passieren.

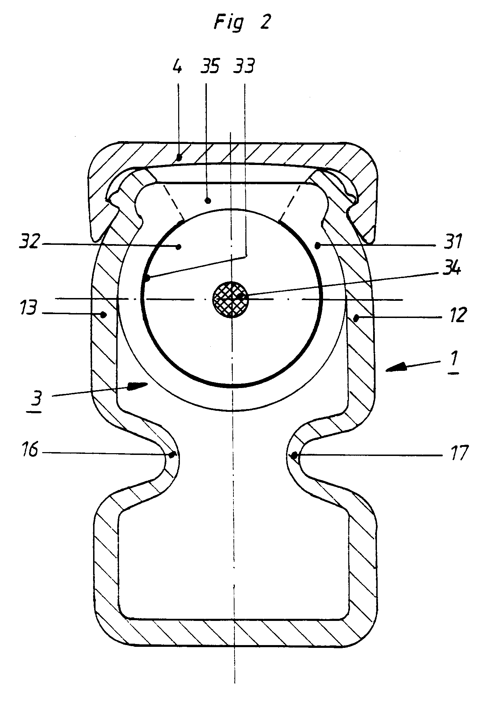

In Fig.2 ist das Trägerprofil 1 nach Fig.1 mit verlängerten U-Schenkeln 12, 13 dargestellt. Die Verrasterung des Signalkabels 3 an den freien Enden der Schenkel 12, 13 erfolgt in gleicher Weise wie zu Fig.1 beschrieben. Das gleiche gilt für die Aufbringung des Deckelteils 4.

In den verlängerten Schenkeln 12, 13 sind Wandeinschnürungen 16, 17 eingebracht, die als Federzungen wirken und die durch den Fahrbetrieb auftretenden Schwingungen dämpfen. Damit wird verhindert, daß das Signalkabel 3 durch diese Schwingungen beschädigt wird. Auf die Abstandhalter 14, 15 aus Fig.1 kann bei dieser Halterung des Signalkabels verzichtet werden. Das Signalkabel 3 wird vielmehr allein durch die Rastspannungen der Schenkel 12, 13 mit dem Deckel 4 in Position gehalten.

## Patentansprüche

1. Halterung eines Signalkabels in einem Trägerprofil, wobei das Signalkabel im Querschnitt über dem Leiter mehrschichtig aufgebaut ist und aus einer Isolierschicht, einer über den größeren Umfangsbereich verlaufenden abschirmenden Sperrschicht und einer äußeren Ummantelungsschicht, von der bereichsweise Längsverdickungen abragen, besteht, gekennzeichnet durch ein U-förmig gestaltetes Trägerprofil (1) mit auf Vorspannung zueinander gerichteten freien U-Schenkeln (12, 13), welche zum lichten Innenraum (2) des Trägerprofils (1) gerichtet an ihren freien Enden die Konturen des Signalkabels im Bereich der Wandverdickungen (311, 312) der Ummantelungsschicht (31) aufweisen und nach außen eine auf eine Wandverdickung (122, 132) folgende Kerbe (123, 124) besitzen, in welche Rasten (411, 412) an den freien Schenkeln (413, 414) eines C-förmigen Deckelteils (4) rastend eingreifen.

2. Halterung nach Anspruch 1, dadurch gekennzeichnet, daß Teilbereiche der Schenkel (12, 13) des Trägerprofils (1) als Schwingungsdämpfer ausgebildet sind.

3. Halterung nach Anspruch 2, dadurch gekennzeichnet, daß die Schenkel (12, 13) des Trägerprofils (1) an definierten Stellen als Federzungen wirkende Wandeinschnürungen (15, 16) aufweisen.
